Europäisches Patentamt

European Patent Office

Office européen des brevets

(19)

(11) Veröffentlichungsnummer : **0 096 267**
**B2**

(12) **NEUE EUROPÄISCHE PATENTSCHRIFT**

(45) Veröffentlichungstag der neuen Patentschrift :
02.11.89

(51) Int. Cl.⁴ : **B 01 D 53/20**

(21) Anmeldenummer : 83105007.5

(22) Anmeldetag : 20.05.83

(54) Ringförmiger Füllkörper für Gas-Flüssigkeitskontakt.

(30) Priorität : 04.06.82 DE 3221128

(43) Veröffentlichungstag der Anmeldung :
21.12.83 Patentblatt 83/51

(45) Bekanntmachung des Hinweises auf die Patenterteilung : 02.05.85 Patentblatt 85/18

(45) Bekanntmachung des Hinweises auf die Entscheidung
über den Einspruch : 02.11.89 Patentblatt 89/44

(84) Benannte Vertragsstaaten :
AT BE CH DE FR GB IT LI LU NL SE

(56) Entgegenhaltungen :
DE--U-- 1 891 441
DE--U-- 7 036 267
GB--A-- 859 298
Verfahrenstechnik 14, 1980, Nr. 10, S. 680
Chemie-Technik Sonderdruck 9, 1980, Nr. 5, Heidelberg, R. Billet "Neuartige Füllkörper"

(73) Patentinhaber : Paul Rauschert GmbH & Co. KG
D-8644 Pressig (DE)

(72) Erfinder : Kober, Rainer
Porzellanfabrik 1
D-8645 Steinwiesen (DE)
Erfinder : Geipel, Werner, Dr.
Nordhalbener Strasse 18
D-8645 Steinwiesen (DE)
Die weiteren Erfinder haben auf ihre Nennung
verzichtet

(74) Vertreter : Weber, Dieter, Dr. et al
Dr. Dieter Weber und Dipl.-Phys. Klaus Seiffert Patentanwälte Gustav-Freytag-Strasse 25 Postfach 6145
D-6200 Wiesbaden 1 (DE)

## Beschreibung

Die Erfindung betrifft einen ringförmigen Füllkörper für Gas-Flüssigkeitskontakt mit wenigstens einer ringförmigen Rippe und hieran im Abstand voneinander angeordneten, radial in das Ringinnere ragenden, scharfkantigen Ablaufplatten.

Füllkörper mit diesen Merkmalen sind bereits bekannt. Sie besitzen mehrere, voneinander beabstandete gewellte ringförmige Rippen mit etwa kreisförmigem Querschnitt und sechs an die ringförmigen Rippen angeschmolzene, im Extrudierverfahren erhaltene Ablaufplatten, die vom Strang abgeschnitten sind und sich daher zwangsläufig über die gesamte Länge der axialen Abmessung des Füllkörpers erstrecken.

Obwohl auch diese Füllkörper Netzstruktur haben, ist der mit ihnen erzielte Stoffübergang sowie ihre Gasdurchlässigkeit noch nicht optimal.

Aus der DE-U-7 036 267, der DE-B-853 159, der US-A-3 266 787, « Verfahrenstechnik », 14 (1980), Nr. 10. Seite 680 und « Chemie-Technik » (1980), Nr. 5, Seite 220 sind Füllkörper mit einem Zylindermantel mit Durchbrechungen bekannt, wobei das Material der Durchbrechungen nach innen gebogen ist oder Ablaufplatten an der Innenwand angesetzt sind. Bei diesen Füllkörpern sind die Ablaufplatten kurz gegenüber der axialen Abmessung des Füllkörpers. Aus der GB-A-859 298 sind Füllkörper bekannt, bei denen sich Ablaufplatten über die ganze Länge erstrecken, und die DE-U-1 891 441 beschreibt hohlzylinderförmige Füllkörper mit seitlichen Öffnungen und inneren Ablaufplatten, die sich teils über die ganze Länge des Füllkörpers erstrecken. Diese bekannten Füllkörper haben alle eine relativ geringe Gasdurchlässigkeit oder relativ geringen Stoffübergang.

Die der Erfindung zugrundeliegende Aufgabe bestand somit darin, die bekannten ringförmigen Füllkörper hinsichtlich des erzielbaren Stoffübergangs und ihrer Gasdurchlässigkeit zu verbessern.

Die erfindungsgemässen ringförmigen Füllkörper für Gas-Flüssigkeitskontakt bestehen aus wenigstens einer ringförmigen Rippe und hieran im Abstand voneinander angeordneten, radial in das Ringinnere ragenden, scharfkantigen Ablaufplatten und sind dadurch gekennzeichnet, dass die Ablaufplatten sich nur über ein Drittel bis vier Fünftel der axialen Abmessung des Füllkörpers erstrecken und abwechselnd am einen Ende des Füllkörpers beginnen und vor dem anderen Ende des Füllkörpers enden, daß sich an die Ablaufplatten, über den Rest der axialen Abmessungen des Füllkörpers Ablaufstege anschließen und daß gegebenenfalls der Füllkörper im Mittelbereich ein Verstärkungsteil besitzt, das wenigstens mit einem Teil der Ablaufplatten verbunden ist.

Überraschenderweise wurde festgestellt, dass durch diese Merkmale die der Erfindung zugrundeliegende Aufgabe gelöst wird, was besonders deswegen überraschend ist, da die Fläche der Ablaufplatten gegenüber den bekannten Füllkörpern vermindert wird, so dass man hierdurch eine Verminderung des Stoffüberganges hätte erwarten müssen. Tatsächlich wird aber durch die Verkleinerung der Ablaufplatten der Stoffübergang nicht vermindert, sondern verbessert, und gleichzeitig wird die Gasdurchlässigkeit des Füllkörpers erhöht, da sein Inneres in geringerem Masse als beim Stand der Technik durch Einbauten versperrt ist.

Die erfindungsgemässen Füllkörper können aus einem scharfkantig erhältlichen Material, insbesondere aus Kunststoff oder Metall, bestehen. Die Scharfkantigkeit bekommt man bei Kunststoffmaterialien durch Herstellung der Füllkörper im Spritzgiessverfahren. Dieses bietet im übrigen gegenüber dem speziellen Extrudierverfahren unter Aufschmelzen der ringförmigen Rippen zur Herstellung der bekannten gitterartigen ringförmigen Füllkörper einen weiteren technologischen Vorteil, da das Herstellungsverfahren einfacher ist.

Die erfindungsgemässen Füllkörper können entweder für regellose Schüttungen oder aber für geordnete Packungen verwendet werden. Für letztere können die Füllkörper einzeln oder bereits zu Blöcken in einzelnen oder mehreren Schichten nebeneinander bzw. übereinander vereinigt in den Handel gebracht werden. Im letzteren Falle werden die Füllkörper untereinander verbunden wie durch Verkleben oder Verschweissen oder durch gemeinsames Spritzgiessen als Einheiten zu mehreren.

Wenn in der vorliegenden Anmeldung von ringförmigen Rippen die Rede ist, so bedeutet dies nicht zwangsläufig die Verwendung kreisringförmiger Rippen, sondern auch Rippen in der Form eines Vieleckes, wie eines Sechseckes, Achteckes usw.

Wenn weiterhin von Ablaufplatten die Rede ist, so bedeutet dieser Begriff integrale Bestandteile des Füllkörpers, deren Dicke wesentlich geringer als ihre Länge und Breite ist. Derartige Ablaufplatten besitzen somit trotz relativ geringer Raumerfüllung zwei relativ grosse Flächen für die Bildung eines Rieselfilmes, der eine ausgeprägte Benetzung der Flüssigphase ermöglicht. Die scharfen Tropfkanten und scharfkantigen Rippen erhöhen die Gasturbulenz und damit den Stoffaustausch.

Besonders zeckmäßig ist es, wenn die Ablaufstege ebenfalls scharfkantig ausgebildet sind. Sie können unterschiedlichen Querschnitt, wie quadratischen, T-förmigen oder anderen mehreckigen Querschnitt, haben. Diese Ablaufstege bilden nur ein geringes Hindernis für den Durchtritt von Gasen, so dass durch sie die Gasdurchlässigkeit des Füllkörpers kaum beeinflusst wird. Andererseits stellen diese Stege aber ein zusätzliches Mittel für die Erzeugung erhöhter Gasturbulenz und daher für erhöhten Stoffaustausch dar.

Zweckmässig erstrecken sich die Ablaufplatten etwa über die Hälfte der axialen Abmessung des Füllkörpers, so dass dann nach der bevorzugten Ausführungsform der Erfindung die sich anschliessenden Ablaufstege die andere Hälfte der axialen Abmessung des Füllkörpers einnehmen.

Beispielsweise enthält ein Füllkörper acht Ablaufplatten. Dabei enden die Ablaufplatten abwechselnd vor dem einen und vor dem anderen Ende der axialen Abmessungen des Füllkörpers, d. h. sie sind abwechselnd im oberen Teil und im unteren Teil des Innenraumes des Füllkörpers angesetzt. Wenn die Ablaufplatten dabei etwa die Hälfte der axialen Abmessung des Füllkörpers einnehmen, so ist es günstig, wenn sie sich in dem Mittelbereich des Füllkörpers etwas überlappen, d. h. beispielsweise etwa 55 bis 60 % der axialen Abmessung des Füllkörpers einnehmen.

Die Ablaufplatten sollten im Inneren des Füllkörpers genügend Platz für den Gasdurchtritt lassen, so dass ihre Breite zweckmässig ein Achtel bis fünf Zwölftel, vorzugsweise ein Sechstel bis zwei Fünftel, des Innendurchmessers des Füllkörpers beträgt.

In bestimmten Fällen kann es zweckmässig sein, im Inneren des Füllkörpers ein Verstärkungsteil vorzusehen, das mit wenigstens einem Teil der Ablaufplatten verbunden ist und die mechanische Stabilität des Füllkörpers erhöht. Dieses Verstärkungsteil kann etwa die Form eines mit vier Ablaufplatten verbundenen Kreuzes oder eines Ringes haben. Dieses Verstärkungsteil kann von den Verteilerkanälen im Spritzgiessverfahren gebildet werden. Es ist aber zweckmässig, dieses Verstärkungsteil so schmal wie möglich zu halten, um die Gasdurchlässigkeit des Innenraumes des Füllkörpers nicht su sehr zu vermindern. Auch das Verstärkungsteil sollte in jedem Fall scharfkantig ausgebildet werden.

Ein besonders zweckmässige Ausbildung der Füllkörper nach der Erfindung besitzt mehrere, wie beispielsweise drei, zueinander parallel angeordnete ringförmige Rippen und daran beispielsweise acht radial nach innen ragende Ablaufplatten. Wenn diese oder andere erfindungsgemässe Füllkörper für regellose Schüttungen verwendet werden, ist es zweckmässig, die Ablaufplatten bzw. Ablaufstege, als die sich die Ablaufplatten fortsetzen, wenigstens über eine der äussersten ringförmigen Rippen hinausragen zu lassen und so zusätzliche Abtropfspitzen zu bilden. Im Falle von Füllkörpern für geordnete Packungen ist es zweckmässig, derartige Abtropfspitzen höchstens am einen Ende des ringförmigen Füllkörpers vorzusehen.

Zweckmässig werden die Abmessungen und Abstände der Einzelteile des Füllkörpers so gewählt, dass die Abstände einander benachbarter Teile des Füllkörpers 8 bis 15, vorzugsweise 10 bis 15, besonders 10 bis 12 mm betragen. Dies gilt beispielsweise für die Abstände der ringförmigen Rippen untereinander sowie auch für die Abstände der Ablaufplatten und Ablaufstege zueinander, soweit sie einander benachbart sind.

Wenn die erfindungsgemässen Füllkörper für geordnete Packungen verwendet und als Einzelfüllkörper in den Handel kommen sollen, ist es zweckmässig, sie so auszubilden, dass sie in der Füllkörpersäule leicht übereinander gestapelt werden können. Hierzu ist es zweckmässig, wenn man die Enden der Ablaufplatten bzw. Ablaufstege am einen Ende des Füllkörpers so ausbildet, dass sie in die äusserste ringförmige Rippe am anderen Ende des Füllkörpers einschiebbar sind. Hierzu kann es zweckmässig sein, an dem Füllkörper nur eine ringförmige Rippe am einen Ende des Füllkörpers vorzusehen, während die Ablaufplatten bzw. Ablaufstege am anderen Ende nicht von einer ringförmigen Rippe gehalten werden und daher mit ihren freien Enden etwas zusammendrückbar und in die ringförmige Rippe des nächsten Füllkörpers einschiebbar sind. Auf diese Weise kann ein Passsitz der übereinandergestapelten Füllkörper erreicht werden.

Zweckmässiger ist es jedoch, und die äusserste ringförmige Rippe an dem einen Ende des Füllkörpers an ihrer Innenseite einen ringsum laufenden Absatz anzuformen und an den am anderen Ende des Füllkörpers überstehenden Ablaufplatten bzw. Ablaufstegen an deren Aussenseite einen entsprechenden Absatz vorzusehen, so dass die freien Enden der Ablaufplatten und Ablaufstege in den Umfang der ringförmigen Rippe des nächsten Füllkörpers derart eingeschoben werden können, dass der Absatz der Ablaufplatten und Ablaufstege auf dem äussersten Ende der rigförmigen Rippe aufsitzt, während das äusserste Ende der Ablaufplatten und Ablaufstege auf dem inneren Absatz der ringförmigen Rippe aufsitzt. Zweckmässig werden die Abmessungen der Absätze so gewählt, dass ein Passsitz entsteht, was durch die Elastizität des verwendeten Kunststoffmaterials noch unterstützt wird.

In der Zeichnung bedeutet

Fig. 1 eine Seitenansicht einer Ausführungsform eines erfindungsgemässen Füllkörpers, die insbesondere für regellose Schüttungen geeignet ist,

Fig. 2 eine Draufsicht auf den in Fig. 1 gezeigten Füllkörper,

Fig. 3 einen Schnitt entlang der Linie III-III in Fig. 2.

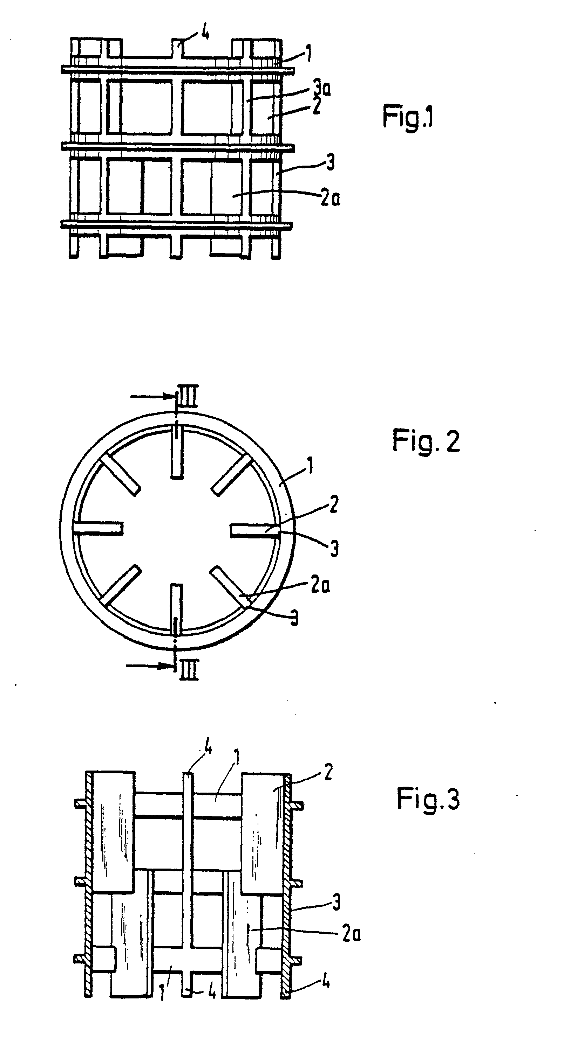

Der in den Fig. 1 bis 3 dargestellte Füllkörper für regellose Schüttungen besitzt drei scharfkantige ringförmige Rippen 1 mit T-förmigem Querschnitt, wobei der mittlere T-Schenkel nach aussen ragt. Integral verbunden mit diesen ringförmigen Rippen 1 besitzt der Füllkörper acht Ablaufplatten 2, 2a, die abwechselnd oben und unten angesetzt sind und jeweils am einen Ende der axialen Abmessung des Füllkörpers beginnen und sich bis etwas über die Mitte des Füllkörpers erstrecken, d. h. etwa 60 % der axialen Abmessung des Füllkörpers einnehmen. Wie in Fig. 3 deutlich erkennbar ist, entsteht somit in der Mitte des Füllkörpers ein Überlappungsbereich, in welchem die einander benachbarten Ablaufplatten 2 und 2a einander überlappen.

An die Ablaufplatten 2, 2a schliessen sich jeweils bis zum Ende der axialen Abmessung des Füllkörpers Ablaufstege 3, 3a an. Die Ablaufplatten und Ablaufstege, welche letztere ebenfalls T-Profil mit nach innen ragendem mittlerem T-Schenkel besitzen, sind ebenfalls scharfkantig ausgebildet.

Die Ablaufplatten 2, 2a und die sich daran anschliessenden Ablaufstege 3, 3a erstrecken sich bis über die äussersten ringförmigen Rippen 1 hinaus und bilden somit Abtropfspitzen 4.

Selbstverständlich können innerhalb des Erfindungsgedankens zahlreiche Abwandlungen vorgenommen werden. Beispielsweise können die ringförmigen Rippen sechseckig oder achteckig oder anderweitig unrund ausgebildet sein und beliebigen Querschnitt besitzen, und beispielsweise können die für geordnete Packungen bestimmten Füllkörper eine Netzstruktur ähnlich derjenigen des Füllkörpers gemäss den Fig. 1 bis 3 haben.

**Patentansprüche**

1. Ringförmiger Füllkörper für Gas-Flüssigkeitskontakt bestehend aus wenigstens einer ringförmigen Rippe (1) und hieran im Abstand voneinander angeordneten, radial in das Ringinnere ragenden, scharfkantigen Ablaufplatten (2, 2a), dadurch gekennzeichnet, daß die Ablaufplatten (2, 2a) sich nur über ein Drittel bis vier Fünftel der axialen Abmessung des Füllkörpers erstrecken und abwechselnd am einen Ende des Füllkörpers beginnen und vor dem anderen Ende des Füllkörpers enden, daß sich an die Ablaufplatten über den Rest der axialen Abmessung des Füllkörpers Ablaufstege (3, 3a) anschließen, und daß gegebenenfalls der Füllkörper im Mittelbereich ein Verstärkungsteil besitzt, das wenigstens mit einem Teil der Ablaufplatten verbunden ist.

2. Füllkörper nach Anspruch 1, dadurch gekennzeichnet, daß er mehrere, zueinander parallel angeordnete ringförmige Rippen (1) aufweist und daß die Ablaufplatten (2, 2a) bzw. Ablaufstege (3, 3a) wenigstens über eine der äußersten ringförmigen Rippen unter Bildung von Abtropfspitzen (4) hinausragen.

3. Füllkörper nach den Ansprüchen 1 und 2, dadurch gekennzeichnet, daß die Ablaufplatten (2, 2a) sich über etwa die Hälfte der axialen Abmessung des Füllkörpers erstrecken.

4. Füllkörper nach den Ansprüchen 1 bis 3, dadurch gekennzeichnet, daß die Ablaufplatten (2, 2a) einander im Mittelbereich des Füllkörpers überlappen.

5. Füllkörper nach den Ansprüchen 1 bis 4, dadurch gekennzeichnet, daß auch die ringförmigen Rippen (1) und Ablaufstege (3, 3a) scharfkantig ausgebildet sind.

6. Füllkörper nach den Ansprüchen 1 bis 5, dadurch gekennzeichnet, daß die ringförmigen Rippen (1) und Ablaufstege (3, 3a) T-förmigen Querschnitt besitzen.

7. Füllkörper nach den Ansprüchen 1 bis 6, dadurch gekennzeichnet, daß die Ablaufplatten (2, 2a) eine Breite von ein Achtel bis fünf Zwölftel des Innendurchmessers des Füllkörpers besitzen.

8. Füllkörper nach den Ansprüchen 1 bis 7, dadurch gekennzeichnet, daß die Abstände einander der benachbarter Teile des Füllkörpers 8 bis 15, vorzugsweise 10 bis 15, besonders 10 bis 12 mm betragen.

9. Füllkörper nach den Ansprüchen 1 bis 8, dadurch gekennzeichnet, daß die Enden der Ablaufplatten bzw. Ablaufstege am einen Ende des Füllkörpers in die äußerste ringförmige Rippe am anderen Ende des Füllkörpers einschiebbar sind.

10. Füllkörper nach Anspruch 9, dadurch gekennzeichnet, daß eine der ringformigen Rippen am einen Ende des Füllkörpers an ihrer Innenseite einen ringsum laufenden Absatz hat und die Ablaufplatten bzw. Ablaufstege am anderen Ende des Füllkörpers an ihrer Außenseite einen dimensionsmäßig entsprechenden Absatz besitzt.

**Claims**

1. An annular packing element member for gas-liquid contact consisting of at least one annular rib (1) and sharp edged drain plates (2, 2a) arranged thereon at a spacing from each other and projecting radially into the interior of the annular configuration, characterized in that the drain plates (2, 2a) extend only over a third to four fifths of the axial dimension of the packing element and alternatively begin at one end of the packing element and terminate before the other end of the packing element, that drain web portions (3, 3a) are attached to the drain plates over the remainder of the axial dimension of the packing element and that optionally in the middle region the packing element has a reinforcing member which is connected at least to a part of the drain plates.

2. A packing element according to claim 1, characterized in that is has a plurality of annular ribs (1) which are arranged parallel to each other, and that the drain plates (2, 2a) or drain web portions (3, 3a), respectively, project at least beyond one of the outermost annular ribs, forming drip-off tip portions (4).

3. A packing element according to claims 1 and 2, characterized in that the drain plates (2, 2a) extend over about half the axial dimension of the packing element.

4. A packing element according to claims 1 to 3, characterized in that the drain plates (2, 2a) overlap each other in the middle region of the packing element.

5. A packing element according to claims 1 to 4, characterized in that the annular ribs (1) and drain web portions (3, 3a) are of a sharp-edged configuration.

6. A packing element according to claims 1 to 5, characterized in that the annular ribs (1) and the drain web portions (3, 3a) are of T-shaped cross-section.

7. A packing element according to claims 1 to 6, characterized in that the drain plates (2, 2a) have a width of from an eighth to five twelfths of the inside diameter of the packing element.

8. A packing element according to claims 1 to 7, characterized in that the spacings of mutually adjacent parts of the packing element are from 8 to 15, preferably from 10 to 15, in particular from 10 to 12 mm.

9. A packing element according to claims 1 to 8, characterized in that the ends of the drain plates or drain web portions, respectively, at one end of the packing element can be inserted into the outermost annular rib at the other end of the packing element.

10. A packing element according to claim 9, characterized in that one of the annular ribs at one end of the packing element has a peripherally extending shoulder configuration on its inside, and the drain plates or drain web portions, respectively, at the other end of the packing element have a shoulder configuration of corresponding dimensions, on their outside.

**Revendications**

1. Elément annulaire de garnissage pour contact gaz-liquide, consistant en au moins une nervure annulaire (1), et des plaquettes d'écoulement (2, 2a) à arêtes vives disposées radialement sur la nervure, écartées l'une de l'autre et en saillie vers l'intérieur de la nervure, caractérisé en ce que les plaquettes d'écoulement (2, 2a) ne s'étendent que sur une longueur, comprise entre un tiers et quatre cinquièmes de la longueur de l'élément de garnissage, dans le sens axial, et commencent alternativement à une extrémité de l'élément de garnissage ; et se terminent avant l'autre extrémité de l'élément de garnissage ; en ce que les plaquettes d'écoulement sont prolongées, sur le reste de la longueur axiale de l'élément de garnisssage, par des barreaux d'écoulement (3, 3a) et en ce qu'éventuellement l'élément de garnissage comporte, dans sa zone médiane, une pièce de renfort, qui est reliée à au moins une partie des plaquettes d'écoulement.

2. Elément de garnissage selon la revendication 1, caractérisé en ce qu'il comporte plusieurs nervures annulaires (1) qui sont parallèles, et en ce que les plaquettes d'écoulement (2, 2a) et les barreaux d'écoulement (3, 3a) se prolongent, au moins au-delà de l'une des nervures annulaires extrêmes, en constituant des points d'égouttage (4).

3. Elément de garnissage selon les revendications 1 et 2, caractérisé en ce que les plaquettes d'écoulement (2, 2a) s'étendent sur environ la moitié de la longueur de l'élément de garnissage, dans le sens axial.

4. Elément de garnissage selon les revendications 1 à 3, caractérisé en ce que les plaquettes d'écoulement (2, 2a) se recouvrent mutuellement dans la zone médiane de l'élément de garnissage.

5. Elément de garnissage selon l'une des revendications 1 à 4, caractérisé en ce que les nervures annulaires (1) ainsi que les barreaux d'écoulement (3, 3a) présentent également des arêtes vives.

6. Elément de garnissage selon l'une des revendications 1 à 5, caractérisé en ce que les nervures annulaires (1) et barreaux d'écoulement (3, 3a) présentent un profil transversal en T.

7. Elément de garnissage selon l'une des revendications 1 à 6, caractérisé en ce que les plaquettes d'écoulement (2, 2a) présentent une largeur comprise entre un huitième et cinq douzièmes du diamètre intérieur de l'élément de garnissage.

8. Elément de garnissage selon l'une des revendications 1 à 7, caractérisé en ce que les intervalles entre des parties adjacentes de l'élément de garnissage sont compris entre 8 et 15 mm, et compris de préférence entre 10 et 15 mm, et plus particulièrement entre 10 et 12 mm.

9. Elément de garnissage selon l'une des revendications 1 à 8, caractérisé en ce que les extrémités des plaquettes d'écoulement ou des barreaux d'écoulement, situées à l'une des extrémités de l'élément de garnissage, peuvent s'emboîter dans la nervure annulaire terminale située à l'autre extrémité d'un élément de garnissage identique.

10. Elément de garnissage selon la revendication 9, caractérisé en ce que l'une des nervures annulaires qui est située à l'une des extrémités de l'élément de garnissage, comporte sur sa face intérieure un rentrant sur tout le pourtour de cette nervure ; et en ce que les plaquettes d'écoulement et les barreaux d'écoulement situés à l'autre extrémité du même élément de remplissage présentent sur leur face extérieure un rentrant de dimensions correspondantes.

Fig.1

Fig. 2

Fig.3